# EUROPEAN PATENT SPECIFICATION

(11) **EP 3 561 442 B1**
(45) Date of publication and mention of the grant of the patent: **18.11.2020**
(21) Application number: 17896541.4
(22) Date of filing: 20.02.2017
(51) Int. Cl.: G01B 11/02, C23C 2/20, C23C 2/24

(54) **STRIP EDGE DETECTION DEVICE AND STRIP EDGE DETECTION METHOD**
VORRICHTUNG UND VERFAHREN ZUR BLATTKANTENDETEKTION
DISPOSITIF ET PROCÉDÉ DE DÉTECTION DE BORD DE FEUILLE

(43) Date of publication of application: 30.10.2019
(73) Proprietor: Primetals Technologies Japan, Ltd., Hiroshima-shi, Hiroshima 733-8553 (JP)
(72) Inventor: YONEKURA, Takashi, Hiroshima-shi Hiroshima 733-8553 (JP); TAMBARA, Masao, Hiroshima-shi Hiroshima 733-8553 (JP); YOSHIKAWA, Masashi, Hiroshima-shi Hiroshima 733-8553 (JP); YAMADA, Masahiro, Hiroshima-shi Hiroshima 733-8553 (JP)
(74) Representative: Strehl Schübel-Hopf & Partner
(86) International application number: PCT/JP2017/006204
(87) International publication number: WO 2018/150586

(56) References cited:
- CN-A- 101 201 276
- JP-A- H0 972 859
- JP-A- H09 178 667
- JP-A- H10 298 727
- JP-A- S63 282 607
- JP-A- 2017 013 114
- JP-A- 2017 020 986

## Description

### TECHNICAL FIELD

The present invention relates to a strip edge detection device and a strip edge detection method.

### BACKGROUND ART

In a molten metal plating facility, after a continuously fed steel strip is immersed in and withdrawn from a molten metal plating bath, a jet of gas is applied to both surfaces of the steel strip from wiping nozzles to remove molten metal excessively adhering to the steel strip. In such a molten metal plating facility, if gases from the opposite wiping nozzles interfere with each other at edges of the steel strip upon supplying the gases to both surfaces of the steel strip, molten metal removal performance decreases, and the edges of the steel strip become thicker than a central portion.

To solve the above problem, in some gas wiping devices, a baffle plate is disposed on the outer side of an edge of the steel strip such that the baffle plate follows the edge of the steel strip to avoid interference between gases supplied from the opposite wiping nozzles, or the wiping nozzles are covered with masks at both outer sides of the steel strip in the strip width direction to avoid collision between wiping gases supplied from the wiping nozzles at both outer sides of the steel strip in the strip width direction. Thus, it is important to detect the position of an edge of the steel strip.

Conventionally, as a device for detecting the position of an edge of a steel strip, a strip position detection device configured to capture an image of both edges of the steel strip by a CCD linear image sensor and detect a border between bright and dark regions in the captured image as the edges of the steel strip is known (see Patent Document 1, for instance).

### Citation List

### Patent Literature

Patent Document 1: JPH5-332728A

JP 09-72859 A discloses an apparatus for detecting an edge flaw of a steel strip.

### SUMMARY

### Problems to be Solved

However, in a case where the strip position detection device disclosed in Patent Document 1 is used for detecting an edge of a steel strip immersed in a molten metal plating bath for plating (hereinafter, referred to as plated strip), since the plated strip immediately after passing through the molten metal plating bath has a mirror surface, it is difficult to distinguish the plated strip from the background. Accordingly, it is difficult to precisely detect the edge position of the plated strip.

In view of the above, an object of the present invention is to provide a strip edge detection device and a strip edge detection method whereby it is possible to precisely detect an edge of a steel strip immersed in and withdrawn from a molten metal bath with a simple configuration.

### Solution to the Problems

To solve the above problem, a strip edge detection device according to the present invention for detecting an edge position of a steel strip withdrawn from a molten metal bath comprises: a light source disposed so as to face the steel strip and configured to emit a marking light extending along a strip width direction toward the steel strip; an imaging device configured to capture an image of a region including an edge of the steel strip and a regular reflected light of the marking light reflected by the steel strip; an analysis unit configured to determine an end position of the regular reflected light of the marking light specularly reflected by the steel strip as the edge position, based on the image captured by the imaging device; a driving mechanism configured to move the imaging device along the strip width direction of the steel strip; and a control unit configured to control the driving mechanism to adjust a position of the imaging device so that the edge position is centered in the image in the strip width direction, based on the edge position determined by the analysis unit.

Further, to solve the above problem, a strip edge detection method according to the present invention for detecting an edge position of a steel strip withdrawn from a molten metal bath comprises: providing a light source disposed so as to face the steel strip and configured to emit a marking light extending along a strip width direction toward the steel strip, an imaging device configured to capture an image of a region including an edge of the steel strip and a regular reflected light of the marking light reflected by the steel strip, an analysis unit configured to determine an end position of the regular reflected light of the marking light specularly reflected by the steel strip as the edge position, based on the image captured by the imaging device, and a driving mechanism configured to move the imaging device along the strip width direction of the steel strip; and controlling the driving mechanism to adjust a position of the imaging device so that the edge position is centered in the image in the strip width direction, based on the edge position determined by the analysis unit.

### Advantageous Effects

With the strip edge detection device and the strip edge detection method according to the present invention, it is possible to precisely detect an edge of a steel strip immersed in and withdrawn from a molten metal bath with a simple configuration.

### BRIEF DESCRIPTION OF DRAWINGS

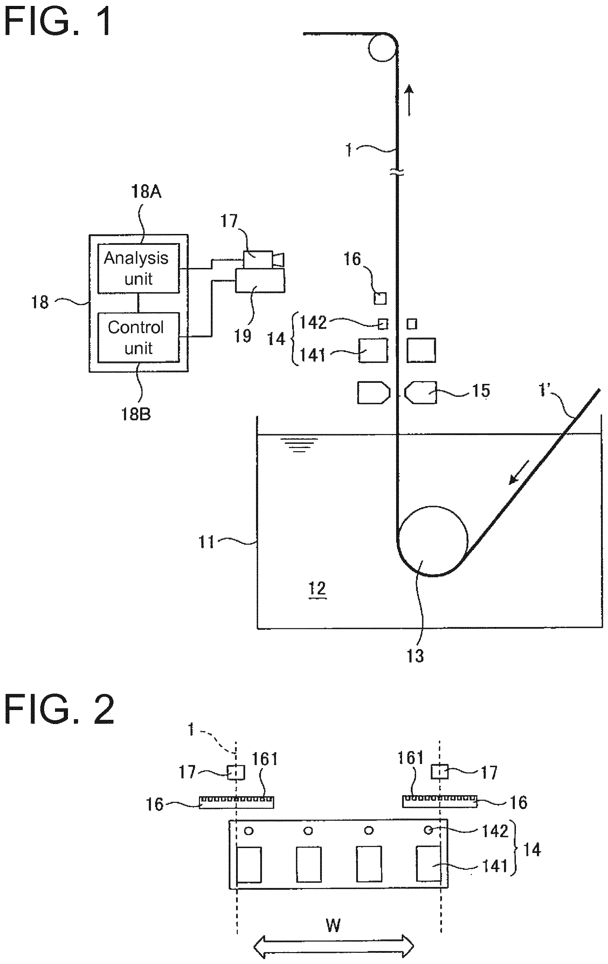

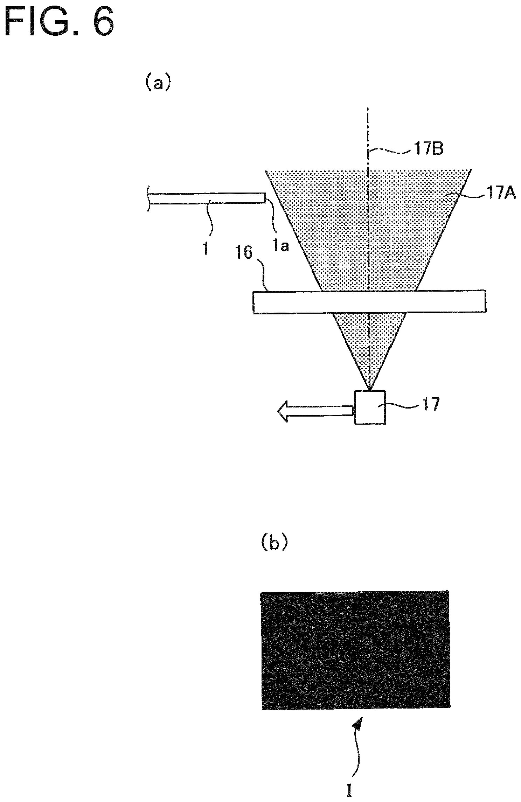

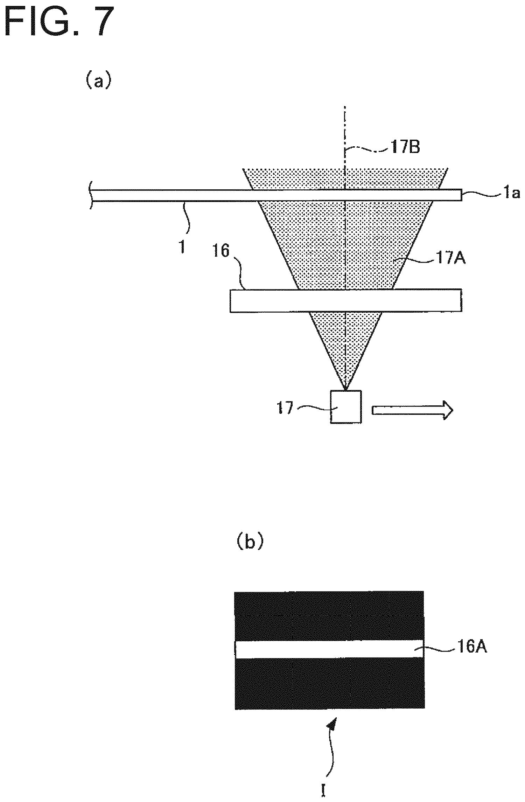

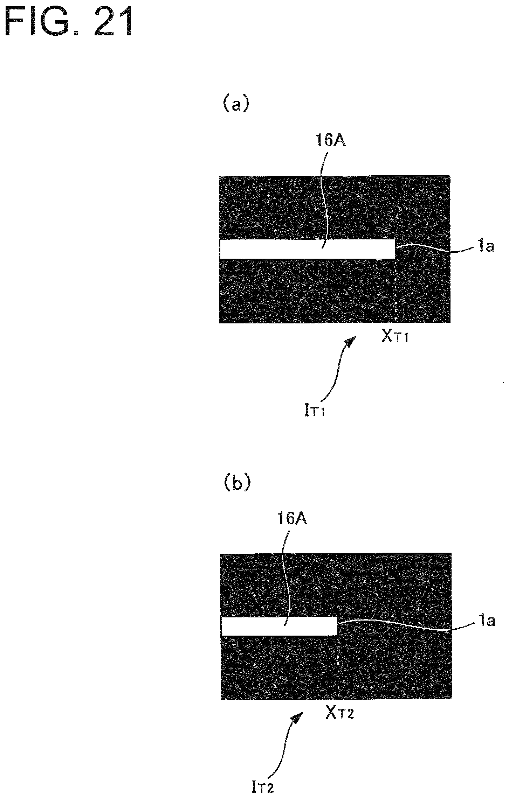

FIG. 1 is a schematic diagram showing an installation example of a strip edge detection device according to a first embodiment of the present invention.
FIG. 2 is a schematic side view of a portion of FIG. 1.
Part (a) of FIG. 3 is a top view of a state before the camera shown in FIG. 1 is moved; part (b) of FIG. 3 is an example of an image captured by the camera shown in part (a) of FIG. 3.
Part (a) of FIG. 4 is a top view of a state after the camera shown in FIG. 1 is moved; part (b) of FIG. 4 is an example of an image captured by the camera shown in part (a) of FIG. 4.

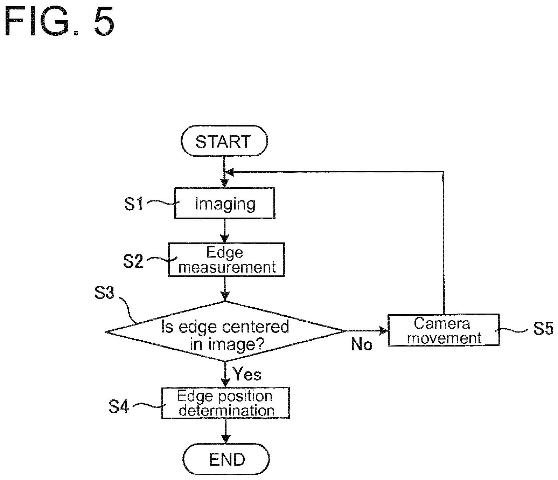

FIG. 5 is a flowchart showing flow of one strip edge measurement process by the strip edge detection device according to the first embodiment of the present invention.
Part (a) of FIG. 6 is a top view of a state where a plated strip is out of the view of the camera shown in FIG. 1; part (b) of FIG. 6 is an example of an image captured by the camera shown in part (a) of FIG. 6.
Part (a) of FIG. 7 is a top view of a state where a plated strip is in the entire view of the camera shown in FIG. 1; part (b) of FIG. 7 is an example of an image captured by the camera shown in part (a) of FIG. 7.

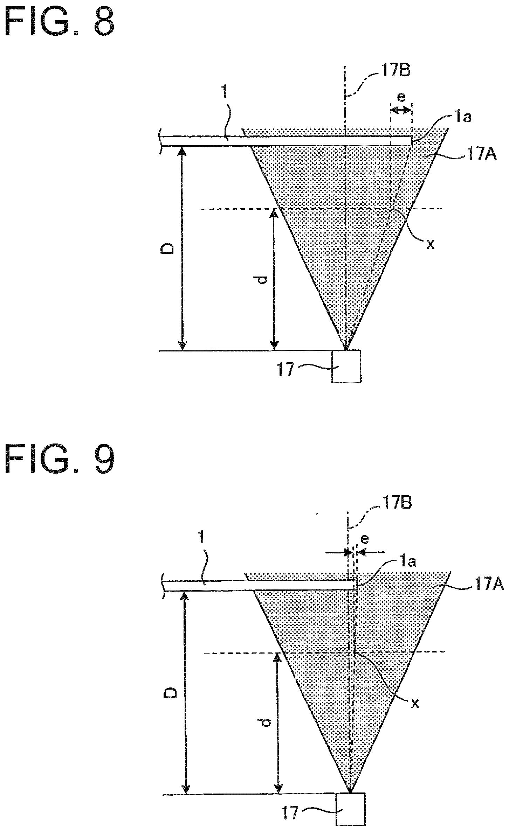

FIG. 8 is an explanatory view of an example of measurement error when the camera shown in FIG. 1 is almost just in front of a strip edge of a plated strip.
FIG. 9 is an explanatory view of an example of measurement error when the camera shown in FIG. 1 is displaced in the strip width direction from the front of a strip edge of a plated strip.

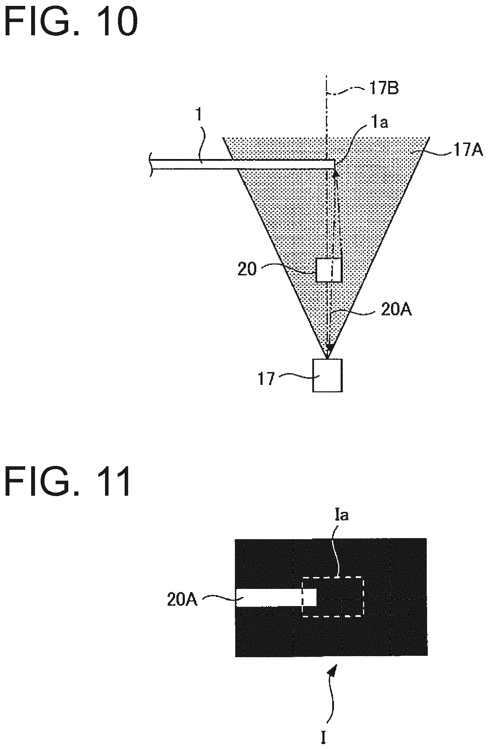

FIG. 10 is a top view of an example of a strip edge detection device according to a second embodiment of the present invention.
FIG. 11 is an example of an image captured in a state where a plated strip is out of the view of the camera shown in FIG. 10.

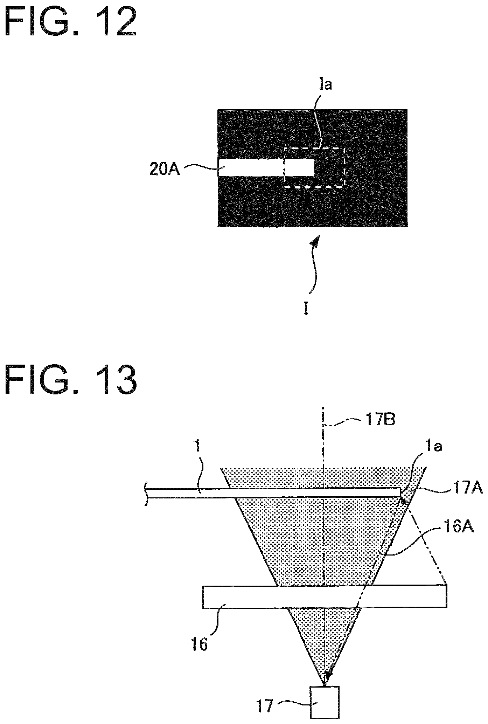

FIG. 12 is an example of an image captured in a state where a plated strip is in the entire view of the camera shown in FIG. 10.
FIG. 13 is a top view of an example of a line illumination in a case where the camera is fixed.

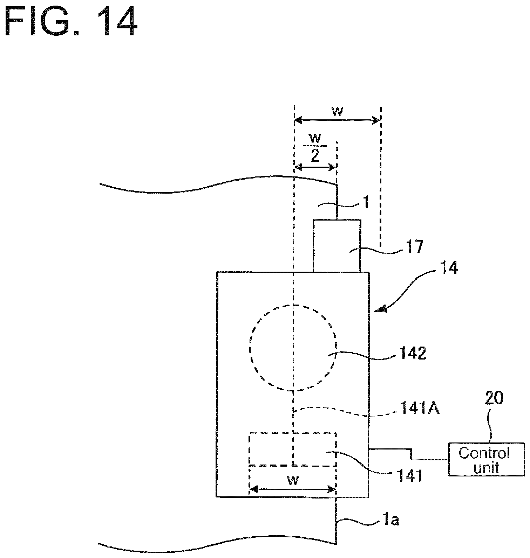

FIG. 14 is a side view of a portion of a strip edge detection device according to a third embodiment of the present invention.

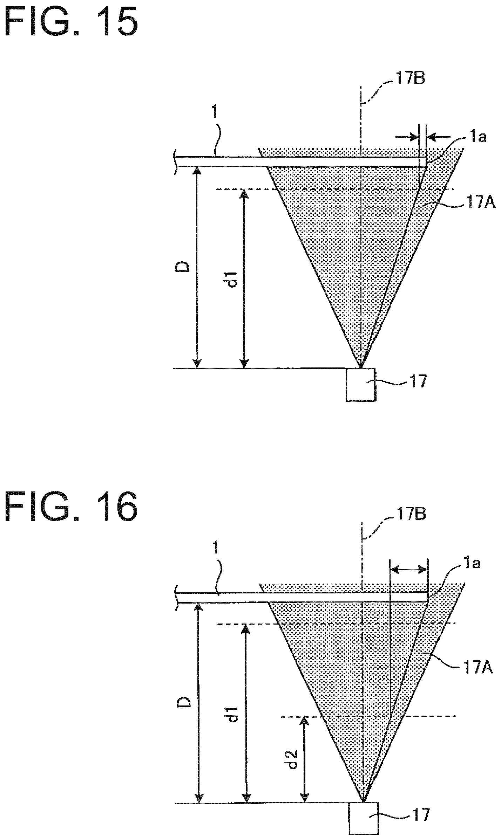

FIG. 15 is a top view for describing measurement error by the strip edge detection device according to the third embodiment of the present invention.
FIG. 16 is a top view for describing measurement error in a case where the strip edge detection device according to the third embodiment of the present invention is not used.

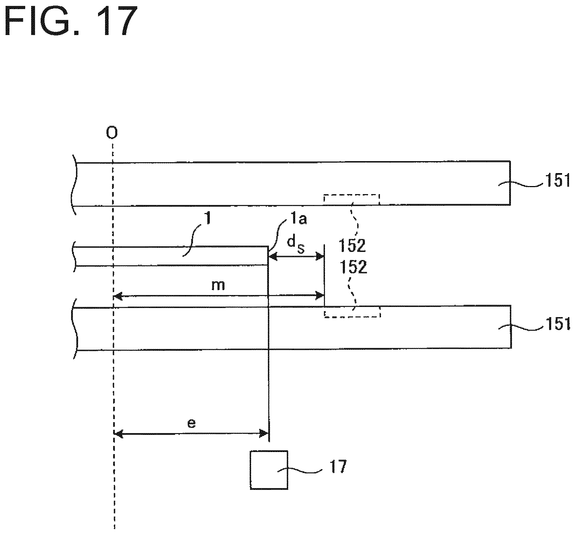

FIG. 17 is a top view of a state before a camera in a fourth embodiment of the present invention is moved.

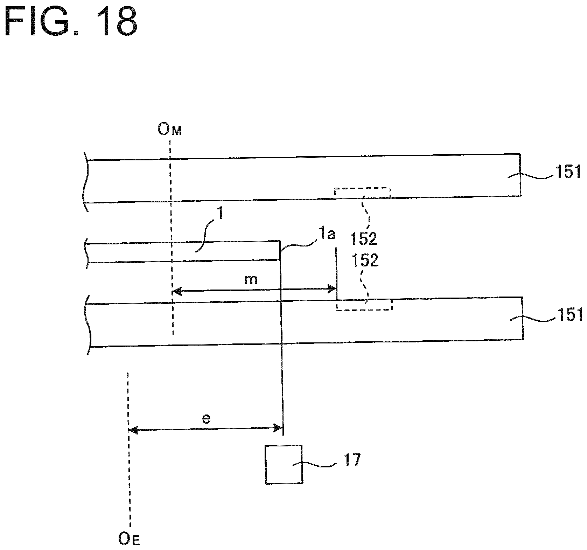

FIG. 18 is a top view of a state after the camera in the fourth embodiment of the present invention is moved.

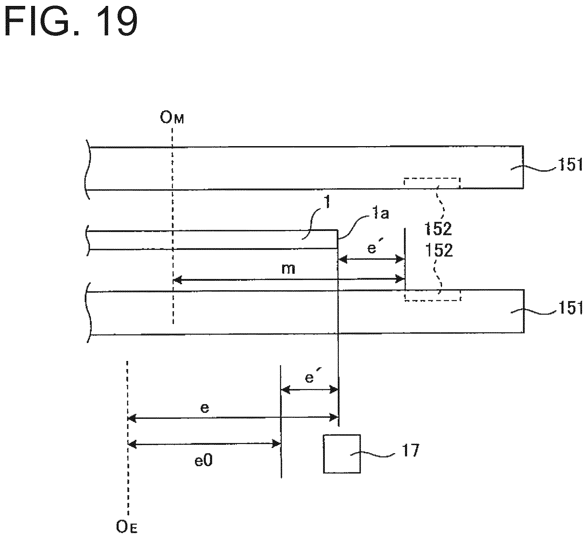

FIG. 19 is a top view of control of a conventional nozzle mask.

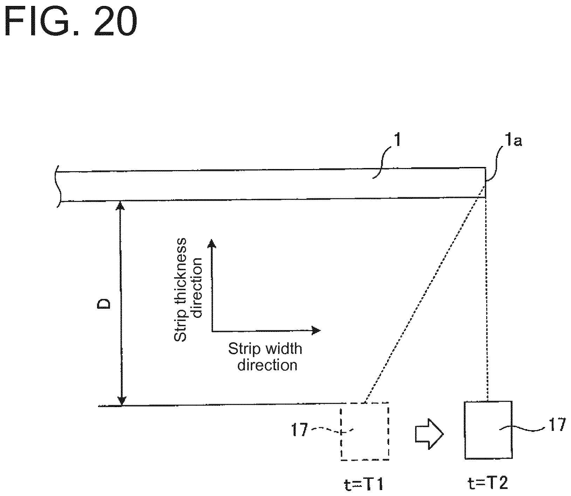

FIG. 20 is a top view of a configuration for measuring a distance between a camera according to a fifth embodiment of the present invention and a plated strip.
Part (a) of FIG. 21 is an example of an image captured before the camera shown in FIG. 20 is moved; part (b) of FIG. 21 is an example of an image captured after the camera shown in FIG. 20 is moved.

### DETAILED DESCRIPTION

A strip edge detection device and a strip edge detection method according to the present invention will now be described with reference to the drawings.

### First Embodiment

A strip edge detection device according to a first embodiment of the present invention will be described in detail with reference to FIGs. 1 to 9.

As shown in FIG. 1, in the molten metal plating facility according to the present embodiment, a continuously fed steel strip 1' is immersed in a molten metal 12 at high temperature stored in a molten metal plating bath (molten metal bath) 11, then directed vertically upward to change the feeding direction by a sink roll 13 disposed in the molten metal plating bath 11, and withdrawn upward. Then, the plated steel strip (hereinafter, referred to as plated strip) 1 is exposed to gas sprayed from a wiping device 15 to remove the molten metal excessively adhering thereto in a state where vibration is damped and warpage of an edge portion is corrected by a damping device 14.

The damping device 14 in the present embodiment includes a pair of upper and lower electromagnets 141 each including a plurality of electromagnets arranged in the strip width direction of the plated strip 1, and an eddy current displacement sensor (strip shape sensor) 142 (see FIG. 2), and is disposed above the wiping device 15. The damping device 14 is configured to be movable in the strip width direction and in a direction toward and away from the plated strip 1. The position of the damping device 14 in the strip width direction is controlled based on the position of a widthwise edge (hereinafter, edge) 1a detected by a strip edge detection device described later so that the damping device 14 is at a position suitable for reducing warpage of the plated strip 1.

Further, the wiping device 15 includes a wiping nozzle 151 and a nozzle mask 152 (see FIG. 17). The wiping nozzle 151 sprays gas to front and back surfaces of the plated strip 1 coming from the molten metal plating bath 11 and traveling upward to control the plating adhesion amount. The nozzle mask 152 seals portions of the wiping nozzle 151 at both outer sides of the plated strip 1 in the strip width direction to avoid collision between wiping gases sprayed from the wiping nozzle 151 at both outer sides of the plated strip 1 in the strip width direction. The nozzle mask 152 is configured to be movable in the strip width direction. The position of the nozzle mask 152 in the strip width direction is controlled based on the position of the edge 1a detected by a strip edge detection device described later.

Further, in the present embodiment, as shown in FIGs. 1 and 2, the molten metal plating facility is provided with a line illumination (light source) 16, a camera (imaging device) 17, a computing device 18, and a camera driving mechanism (driving mechanism) 19 as a strip edge detection device.

The line illumination 16 includes a plurality of LEDs 161 arranged in a row and is configured to obtain a line-like illumination light (hereinafter, marking light) by a diffuser (not shown). The length and the position of the line illumination 16 are set so that the longitudinal direction of the marking light is along the strip width direction of the plated strip 1 and the marking light is emitted at least in a predetermined range including the edge 1a of the plated strip 1.

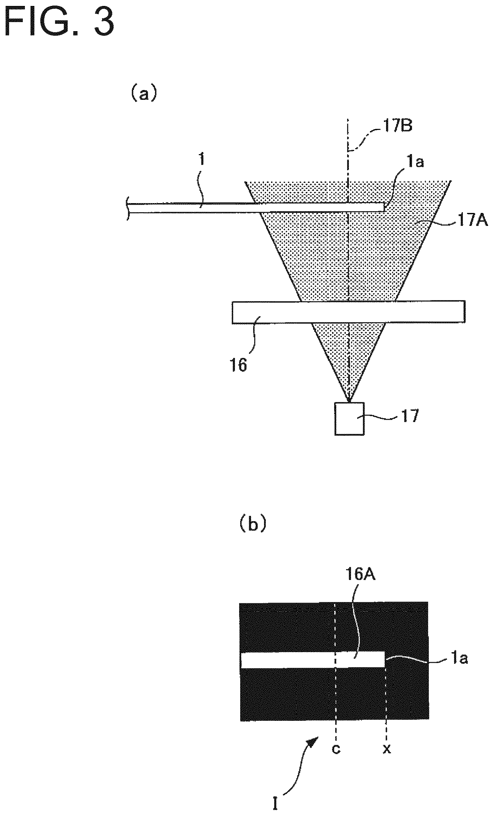

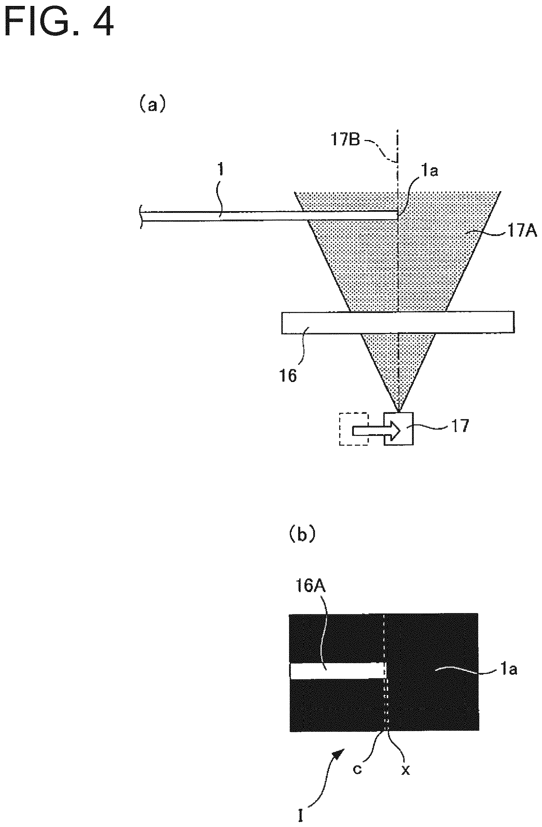

The camera 17 is disposed on the same side of the plated strip 1 as the line illumination 16 at a height different from the line illumination 16 so as to capture at least an image of a regular reflected light 16A of the marking light specularly reflected by the plated strip 1 and the edge 1a of the plated strip 1. The camera 17 may be, for instance, a CCD camera, and the exposure time is set so that only the regular reflected light 16A of the marking light specularly reflected by the plated strip 1 appears in an image I as a bright region, as exemplified in part (b) of FIG. 3 and part (b) of FIG. 4. In FIGs. 3 and 4, 17A denotes the view of the camera 17, and 17B denotes the optical axis of the camera 17. The camera 17 is provided on each side of the plated strip 1 so as to correspond to each edge of the plated strip 1.

Further, the computing device 18 includes an analysis unit 18A and a control unit (adjustment unit) 18B.

The analysis unit 18A determines an edge position x of the plated strip 1 from the image I of the plated strip 1 captured by the camera 17. That is, the edge position x appears in the image I of the plated strip 1 captured by the camera 17 as an end position of the regular reflected light 16A in the strip width direction. The analysis unit 18A detects the end position of the regular reflected light 16A in the image I as the edge position x. Further, the detected edge position x is converted into real coordinates by a known method to determine the actual position of the edge 1a of the plated strip 1.

In the present embodiment, the analysis unit 18A converts the edge position of the plated strip 1 in the image I into real coordinates by using a distance (hereinafter, referred to as assumed distance) d previously assumed to be a distance from the camera 17 to the plated strip 1.

Further, the control unit 18B controls the camera driving mechanism 19 to move the camera 17 so that the edge position x comes close to the center (position shown by "c" in part (b) of FIG. 3 and part (b) of FIG. 4) of the image I in the strip width direction, in other words, so that the camera 17 comes just in front of the edge 1a (i.e., the position of the optical axis 17B in the strip width direction coincides with the position of the edge 1a in the strip width direction), based on the edge position x in the image I detected by the analysis unit 18A.

The camera driving mechanism 19 moves the camera 17 along the strip width direction.

The flow of strip edge measurement process in the present embodiment will now be simply described with reference to FIG. 5.

As shown in FIG. 5, in a case where the strip edge is measured in the present embodiment, first, an image of the plated strip 1 is captured by the camera 17 (step S1), and the end position of the regular reflected light 16A in the captured image I is detected as the edge position x by the analysis unit 18A, based on the image I (step S2). Then, it is determined whether the edge position x detected in the step S2 is centered in the image I in the strip width direction (step S3).

As a result of determination in the step S3, for instance, if it is determined that the end position of the regular reflected light 16A is not centered in the image I in the strip width direction as shown in part (b) of FIG. 3 (NO), the method proceeds to the step S5, and the control unit 18B controls the camera driving mechanism 19 to move the camera 17 so that the end position of the regular reflected light 16A on the image is moved to the center of the image I in the strip width direction (i.e., so that the optical axis 17B of the camera 17 is moved to the front side of the edge 1a), and the method returns to the step S1. In this way, the camera 17 is moved until the edge 1a is centered in the image I in the strip width direction. On the other hand, a result of determination in the step S3, if it is determined that the end portion of the regular reflected light 16A is centered in the image I in the strip width direction as shown in part (b) of FIG. 4 (YES), the method proceeds to the step S4, and the position of the edge 1a is determined. The above process is repeatedly performed.

At this time, if the regular reflected light 16A is out of the image I captured by the camera 17 as shown in part (b) of FIG. 6, the optical axis 17B of the camera 17 is considered to be located on the outer side of the edge 1a in the strip width direction (opposite to the center side in the strip width direction) as shown in part (a) of FIG. 6, and the control unit 18B controls the camera driving mechanism 19 to move the camera 17 toward the center in the strip width direction

On the other hand, if the regular reflected light 16A is visible across the entire strip width directional range of the image I captured by the camera 17 as shown in part (b) of FIG. 7, the optical axis 17B of the camera 17 is considered to be located on the center side of the edge 1a in the strip width direction as shown in part (a) of FIG. 7, and the control unit 18B controls the camera driving mechanism 19 to move the camera 17 outward in the strip width direction.

As described above, in the present embodiment, the image I of the regular reflected light 16A captured by the camera 17 is processed to detect the end position of the regular reflected light 16A in the strip width direction as the edge position x, and the position of the camera 17 is adjusted so that the edge position x is centered in the image I in the strip width direction. Thereby, it is possible to determine the actual position of the edge 1a, based on the edge position x in the image I captured while the camera 17 is located in front of the edge 1a.

Here, as shown in FIG. 8, in case of determining the actual position of the edge 1a by using the assumed distance d (fixed value) from the camera 17 to the plated strip 1, if the assumed distance d is different from an actual distance D from the camera 17 to the plated strip 1, measurement error e may occur between the actual position of the edge 1a and the position of the edge 1a detected based on the position x in the image I of the regular reflected light 16A captured by the camera 17.

To remedy this, in the present embodiment, the position of the optical axis 17B in the strip width direction is caused to (substantially) coincide with the edge 1a. Thereby, as shown in FIG. 9, it is possible to reduce the measurement error e caused when the camera 17 is in front of the edge 1a, compared with the measurement error e caused when the position of the optical axis 17B shown in FIG. 9 in the strip width direction is separated from the position of the edge 1a in the strip width direction.

As described above, with the strip edge detection device and the strip edge detection method according to the present embodiment, it is possible to measure the edge position x of the plated strip 1 in a state where the camera 17 is always in front of the edge 1a. Thus, it is possible to reduce the measurement error and accurately determine the position of the edge 1a.

Further, since the damping device 14 reduces warpage of the plated strip 1 and damps vibration of the plated strip 1, it is possible to stabilize a positional relationship between the line illumination 16, the camera 17, and the plated strip 1, and it is possible to accurately detect the edge position.

### Second Embodiment

A strip edge detection device and a strip edge detection method according to a second embodiment of the present invention will now be described with reference to FIGs. 10 to 14.

As shown in FIG. 10, in the present embodiment, a line illumination 20 is used instead of the line illumination 16 in the first embodiment.

The line illumination 20 is set so as to emit a marking light having a longitudinal direction parallel to the strip width direction of the plated strip 1 like the line illumination 16 described in the first embodiment, but the length of the marking light emitted from the line illumination 20 in the strip width direction is shorter than that of the line illumination 16. The line illumination 20 is configured to move along the strip width direction of the plated strip 1 in conjunction with the camera 17 by the camera driving mechanism 19.

Further, as shown in FIGs. 11 and 12, the analysis unit 18A in the present embodiment performs image processing in a measurement range Ia set for the image I captured by the camera 17. That is, if the end position of the regular reflected light 20A is not centered in the image I in the strip width direction as shown in FIG. 11, the control unit 18B controls the camera driving mechanism 19 to move the camera 17 so that the end position of the regular reflected light 20A in the measurement range Ia is moved toward the center of the image I in the strip width direction until the edge 1a is moved to the center of the image I in the strip width direction. On the other hand, if the end portion of the regular reflected light 20A is centered in the image I in the strip width direction as shown in FIG. 12, the position of the edge 1a is determined.

Further, if the regular reflected light 20A is out of the measurement range Ia, the optical axis 17B of the camera 17 is considered to be located on the outer side of the edge 1a in the strip width direction (opposite to the center side in the strip width direction), and the control unit 18B controls the camera driving mechanism 19 so as to move the camera 17 toward the center in the strip width direction.

On the other hand, if the regular reflected light 20A is visible across the entire strip width direction of the measurement range Ia, the optical axis 17B of the camera 17 is considered to be located on the center side of the edge 1a in the strip width direction, and the control unit 18B controls the camera driving mechanism 19 so as to move the camera 17 outward in the strip width direction.

The other configuration is the same as in the first embodiment, and overlapping description will be omitted.

Here, in a case where the position of the camera 17 is fixed, in order to reliably capture by the camera 17 an image of the regular reflected light 16A of the marking light reflected by the plated strip 1, it is necessary to set the length of the line illumination in the strip width direction in accordance with a range of moving the edge 1a so that the image of the regular reflected light 16A can be captured by the camera 17 regardless of the change in position of the edge 1a of the plated strip 1 in the strip width direction, like the line illumination 16 shown in FIG. 13.

By contrast, with the strip edge detection device and the strip edge detection method according to the present embodiment, since the camera 17 follows the edge 1a, it is possible to capture an image of the regular reflected light at the edge 1a in the vicinity of the center of the view 17A even if the length of the line illumination 20 shown in FIG. 10 is shorter than that of the line illumination 16 shown in FIG. 13. Accordingly, it is possible to reduce the cost of the light source compared with the first embodiment. Further, since the measurement range Ia is provided in the image I, and the position of the edge a is determined by analyzing the image in the measurement range Ia, it is possible to more easily perform process for detecting the edge position x.

### Third Embodiment

A strip edge detection device and a strip edge detection method according to a third embodiment of the present invention will now be described with reference to FIGs. 14 to 16.

In the present embodiment, compared with the first embodiment or the second embodiment, the damping device 14 is used as the driving mechanism instead of the camera driving mechanism 19. Specifically, as shown in FIG. 14, the camera 17 is fixed to an upper surface of a frame of the damping device 14, and the camera 17 is moved along the strip width direction by controlling the movement of the damping device 14 with the control unit 18B.

When the damping device 14 is at a position suitable for reducing warpage of the plated strip 1, the camera 17 is fixed to an upper surface of a base of the damping device 14 so as to be just in front of the edge 1a.

Specifically, the optical axis 17B is preferably fixed in a range extending from the core center 141A of the electromagnet 141 outward in the strip width direction over a distance equal to the width w of the core of the electromagnet 141, in a state where an end portion of the core of the electromagnet 141 in the strip width direction coincides with the edge 1a.

Further, the optical axis 17A is more preferably fixed in a range extending from the core center 141A of the electromagnet 141 outward in the strip width direction over a distance which is half the width w of the electromagnet 141.

Further, in contrast to the first embodiment and the second embodiment in which the focus length of the camera 17 is the assumed distance d (fixed value), in the present embodiment, since the camera 17 is moved in conjunction with the damping device 14, it is possible to use a distance measured by the displacement sensor 142 as the distance from the camera 17 to the plated strip 1.

However, when the damping device 14 is not yet operated and the actual distance D between the damping device 14 and the plated strip 1 is longer than an upper limit d1 of distance measurable with the displacement sensor 142, as shown in FIG. 15, the distance from the camera 17 to the plated strip 1 is assumed to be the measurable distance upper limit d1 instead of the actual distance D to determine the edge position x of the plated strip 1 in the image.

By setting the measurable distance upper limit d1 as the assumed distance, as shown in FIG. 15, it is possible to reduce a measurement error between the actual position of the edge 1a and the edge position x determined by the analysis unit 18A with respect to the plated strip which is too far to be measured with the displacement sensor 142, compared with the case where a value d2 smaller than the measurable distance upper limit d1 is set as the assumed distance from the camera 17 to the plated strip 1.

The other configuration is the same as in the first embodiment or the second embodiment, and overlapping description will be omitted.

With the strip edge detection device and the strip edge detection method according to the present embodiment having the above configuration, it is possible to eliminate a device for moving the camera 17, in addition to the effects due to the first embodiment. Further, since the frame of the damping device 14 can be controlled so as to follow the edge 1a, it is unnecessary to separately detect the position of the frame of the damping device 14, and it is possible to easily calibrate the damping device 14, compared with the first embodiment.

### Fourth Embodiment

A strip edge detection device and a strip edge detection method according to a fourth embodiment of the present invention will now be described with reference to FIGs. 17 to 19.

As shown in FIGs. 18 and 19, in the present embodiment, in any of the first to third embodiments, the origin of the nozzle mask 152 and the origin of the damping device 14 are separately set as a nozzle mask origin O_{M} and a damping device origin O_{E} respectively to control the position of the nozzle mask 152 and the position of the damping device 14.

More specifically, in the present embodiment, first, the nozzle mask 152 is moved into a position where splash does not occur, and the position m0 of the nozzle mask 152 and the position e0 of the damping device 14 at this time are recorded as reference positions. Then, at control, assuming that "e" is distance from the damping device origin O_{E} to the edge 1a, "m" is optimum distance from the nozzle mask origin O_{M} to the nozzle mask 152, and e' (=e-e0) is movement amount e' of the edge 1a, the position of the nozzle mask 152 is controlled so that the distance m meets m=m0+(e-e0).

The other configuration is the same as in the first embodiment, the second embodiment, or the third embodiment, and overlapping description will be omitted.

Meanwhile, for the positions of conventional damping device 14 and nozzle mask 152 in the strip width direction, a common origin O is set as shown in FIG. 17, and the position of the damping device 14 and the position of the nozzle mask 152 are adjusted so that the common origin O serves as the respective origins. Specifically, assuming that "e" is position of the camera 17 (damping device 14) relative to the common origin O, and dₛ is optimum distance from the edge 1a to the nozzle mask 152, the distance m from the common origin O to the nozzle mask 152 is defined as m=e+dₛ, by which the position of the nozzle mask 152 is controlled.

However, since the damping device 14 is preferably controlled based on the center of the plated strip 1 in the strip width direction while the nozzle mask 152 is preferably controlled based on the distance from the edge 1a of the plated strip 1, it is difficult for the conventional configuration to set the common origin. That is, since a large error occurs between the origin of the damping device 14 and the origin of the nozzle mask 152, it is difficult to precisely control both of the damping device 14 and the nozzle mask 152.

By contrast, with the strip edge detection device and the strip edge detection method according to the present embodiment, it is possible to separately set the origins of the damping device 14 and the nozzle mask 152 which move differently, and thus it is possible to perform precise zero-point adjustment of each of the damping device 14 and the nozzle mask 152.

### Fifth Embodiment

A strip edge detection device and a strip edge detection method according to a fifth embodiment of the present invention will now be described with reference to FIGs. 20 and 21.

In the present embodiment, in any of the first to fourth embodiments, the distance from the camera 17 to the plated strip 1 is determined with the stereo method by utilizing the movement of the camera 17 when the position of the camera 17 is corrected.

That is, in the present invention, when the camera 17 is moved to the front of the edge 1a, multiple images I varying in the edge position x in the image I ("parallax") are obtained by the difference in the position of the camera 17 in the strip width direction.

Then, in the present embodiment, the analysis unit 18A determines the distance from the plated strip 1 to the camera 17 with the stereo method, based on the parallax and the position of the camera 17 that captures each image I in the strip width direction, and the determined distance is used to calculate the edge position x in the strip width direction.

Specifically, as shown in FIGs. 20 and 21, the distance from the camera 17 to the plated strip 1 is determined with the stereo method by using the positions of the camera 17 in the strip width direction at times T1, T2 between which the camera 17 is moved to the front of the edge 1a, and the edge positions x_{T1}, x_{T2} obtained from two images I_{T1}, I_{T2} captured by the camera 17 at times T1, T2.

The other configuration is substantially the same as in any of the first embodiment to fourth embodiment, and overlapping description will be omitted.

With the strip edge detection device and the strip edge detection method according to the present embodiment having the above configuration, it is possible to obtain positional information of the plated strip 1 in the strip thickness direction, based on the so-called stereo method using the images I_{T1}, I_{T2} captured by the camera 17 at different times while moving the camera 17. Thus, it is possible to more precisely measure the position of the edge 1a of the plated strip 1.

### Industrial Applicability

The present invention can be applied to a strip edge detection device and a strip edge detection method.

### Reference Signs List

- 1: Plated strip
- 1': Steel strip
- 1a: Edge position
- 11: Molten metal plating bath
- 12: Molten metal
- 13: Sink roll
- 14: Damping device
- 141: Electromagnet
- 142: Displacement sensor
- 15: Wiping device
- 151: Wiping nozzle
- 152: Nozzle mask
- 16: Line illumination
- 16A: Regular reflected light
- 17: Camera
- 17A: View
- 17B: Optical axis
- 18: Computing device
- 18A: Analysis unit
- 18B: Control unit
- 19: Camera driving mechanism
- 20: Line illumination

## Claims

1. A strip edge detection device for detecting an edge position of a steel strip (1) withdrawn from a molten metal bath (11), comprising:
a light source (16) disposed so as to face the steel strip (1) and configured to emit a line-like marking light extending along a strip width direction toward the steel strip (1);
an imaging device (17) configured to capture an image of a region including an edge of the steel strip (1) and a regular reflected light of the line-like marking light reflected by the steel strip (1);
an analysis unit (18A) configured to determine an end position of the regular reflected light of the line-like marking light specularly reflected by the steel strip (1) as the edge position, based on the image captured by the imaging device (17);
a driving mechanism (19) configured to move the imaging device (17) along the strip width direction of the steel; strip (1); and
a control unit (18B) configured to control the driving mechanism (19) to adjust a position of the imaging device (17) so that the edge position is centered in the image in the strip width direction, based on the edge position determined by the analysis unit (18A).

2. The strip edge detection device according to claim 1,
wherein the analysis unit (18A) is configured to determine the edge position, based on a part of the image in a measurement range set for the image in advance.

3. The strip edge detection device according to claim 1 or 2,
wherein the analysis unit (18A) is configured to determine a distance from the imaging device to the steel strip (1) by a stereo method, based on two images captured by the imaging device (17) it different positions in the strip width direction.

4. The strip edge detection device according to any one of claims 1 to 3, further comprising a damping device (14) including an electromagnet (141) for damping vibration of the steel strip (1) and correcting warpage of an edge portion of the steel strip (1), wherein the control unit (18B) is configured to control a position of the damping device (14) in the strip width direction, based on the edge position determined by the analysis unit (18A).

5. The strip edge detection device according to claim 4,
wherein the driving mechanism is the damping device (14).

6. The strip edge detection device according to claim 5,
wherein the imaging device (17) is fixed to the damping device (14) so that a position of an optical axis of the imaging device (17) in the strip width direction is located in a range extending from a center of a core of the electromagnet (141) with respect to the strip width direction toward the edge of the steel strip (1) over a distance equal to a width (w) of the core in the strip width direction.

7. The strip edge detection device according to claim 5,
wherein the imaging device (17) is fixed to the damping device (14) so that a position of an optical axis of the imaging device (17) in the strip width direction is located in a range extending from a center of a core of the electromagnet (141) with respect to the strip width direction toward the edge of the steel strip (1) over a distance which is half a width (w) of the core in the strip width direction.

8. The strip edge detection device according to any one of claims 2 to 7,
wherein the control unit (18B) is configured to control the driving mechanism (19) so as to move the imaging device (17) away from a center in the strip width direction if the regular reflected light of the line-like marking light is in the measurement range of the image across the entire strip width direction, and
wherein the control unit (18B) is configured to control the driving mechanism (19) so as to move the imaging device (17) toward the center in the strip edge direction if the regular reflected light of the marking light is out of the measurement range of the image.

9. A molten metal plating facility comprising:
the strip edge detection device according to any one of claims 1 to 8; and
a wiping device (15) including a wiping nozzle (151) and a nozzle mask (152) adjusting a position of an opening end of the wiping nozzle (151) in the strip width direction,
wherein the control unit (18B) is configured to control a position of the nozzle mask (152) in the stirp width direction, based on the edge position.

10. A strip edge detection method for detecting an edge position of a steel strip (1) withdrawn from a molten metal bath (11), comprising:
providing a light source (16) disposed so as to face the steel strip (1) and configured to emit a line-like marking light extending along a strip width direction toward the steel strip (1), an imaging device (17) configured to capture an image of a region including an edge of the steel strip (1) and a regular reflected light of the line-like marking light reflected by the steel strip (1), an analysis unit (18A) configured to determine an end position of the regular reflected light of the line-like marking light specularly reflected by the steel strip (1) as the edge position, based on the image captured by the imaging device (17), and a driving mechanism (19) configured to move the imaging device (17) along the strip width direction of the steel strip (1); and
controlling the driving mechanism (19) to adjust a position of the imaging device (17) so that the edge position is centered in the image in the strip width direction, based on the edge position determined by the analysis unit (18A).

## Patentansprüche

1. Stahlstreifen-Kantenerfassungsvorrichtung zur Erfassung einer Kantenlage eines Stahlstreifens (1), der aus einem Schmelzmetallbad (11) gezogen wird, umfassend:
eine Lichtquelle (16), die dem Stahlstreifen (1) zugewandt angeordnet und eingerichtet ist, zum Stahlstreifen (1) hin ein linienartiges Markierungslicht zu emittieren, das sich in Streifenbreitenrichtung erstreckt;
eine Bildgebungsvorrichtung (17) zum Aufnehmen eines Bilds eines eine Kante des Stahlstreifens (1) enthaltenden Bereichs sowie eines regulär reflektierten Lichts des linienartigen Markierungslichts, das vom Stahlstreifen (1) reflektiert wird;
eine Analyseeinheit (18A), die eingerichtet ist, aufgrund des von der Bildgebungsvorrichtung (17) aufgenommenen Bilds als Kantenlage einen Endort des regulär reflektierten Lichts des linienartigen Markierungslichts zu bestimmen, das vom Stahlstreifen (1) spiegelnd reflektiert wird;
einen Antriebsmechanismus (19) zum Bewegen der Bildgebungsvorrichtung (17) in Streifenbreitenrichtung des Stahlstreifens (1); und
eine Steuereinheit (18B) zum Steuern des Antriebsmechanismus (19), um aufgrund der von der Analyseeinheit (18A) bestimmten Kantenlage einen Ort der Bildgebungsvorrichtung (17) so einzustellen, dass die Kantenlage im Bild in Streifenbreitenrichtung zentriert ist.

2. Streifenkanten-Erfassungsvorrichtung nach Anspruch 1,
wobei die Analyseeinheit (18A) eingerichtet ist, die Kantenlage aufgrund eines Teils des Bilds in einem für das Bild vorab festgelegten Messbereich zu bestimmen.

3. Streifenkanten-Erfassungsvorrichtung nach Anspruch 1 oder 2,
wobei die Analyseeinheit (18A) eingerichtet ist, aufgrund von zwei Bildern, die von der Bildgebungsvorrichtung (17) an verschiedenen Orten in Streifenbreitenrichtung aufgenommen werden, mittels eines Stereo-Verfahrens einen Abstand von der Bildgebungsvorrichtung zum Stahlstreifen (1) zu bestimmen.

4. Streifenkanten-Erfassungsvorrichtung nach einem der Ansprüche 1 bis 3 mit einer einen Elektromagneten (141) enthaltenden Dämpfungsvorrichtung (14) zum Dämpfen einer Vibration des Stahlstreifens (1) und zum Korrigieren eines Verzugs eines Kantenbereichs des Stahlstreifens (1),
wobei die Steuereinheit (18B) eingerichtet ist, einen Ort der Dämpfungsvorrichtung (14) in Streifenbreitenrichtung aufgrund der von der Analyseeinheit (18A) bestimmten Kantenlage zu steuern.

5. Streifenkanten-Erfassungsvorrichtung nach Anspruch 4,
wobei der Antriebsmechanismus die Dämpfungsvorrichtung (14) ist.

6. Streifenkanten-Erfassungsvorrichtung nach Anspruch 5,
wobei die Bildgebungsvorrichtung (17) so an der Dämpfungsvorrichtung (14) angebracht ist, dass ein Ort einer optischen Achse der Bildgebungsvorrichtung (17) in Streifenbreitenrichtung in einem Bereich angeordnet ist, der sich von einer Mitte eines Kerns des Elektromagneten (141) bzgl. der Streifenbreitenrichtung zur Kante des Stahlstreifens (1) über eine Länge erstreckt, die gleich einer Breite (w) des Kerns in Streifenbreitenrichtung ist.

7. Streifenkanten-Erfassungsvorrichtung nach Anspruch 5,
wobei die Bildgebungsvorrichtung (17) so an der Dämpfungsvorrichtung (14) angebracht ist, dass ein Ort einer optischen Achse der Bildgebungsvorrichtung (17) in Streifenbreitenrichtung in einem Bereich angeordnet ist, der sich von einer Mitte des Kerns des Elektromagneten (141) bzgl. der Streifenbreitenrichtung zur Kante des Stahlstreifens (1) über eine Länge erstreckt, die die Hälfte einer Breite (w) des Kerns in Streifenbreitenrichtung ist.

8. Streifenkanten-Erfassungsvorrichtung nach einem der Ansprüche 2 bis 7,
wobei die Steuereinheit (18B) eingerichtet ist, den Antriebsmechanismus (19) so zu steuern, dass die Bildgebungsvorrichtung (17) von einer Mitte in Streifenbreitenrichtung wegbewegt wird, wenn sich das regulär reflektierte Licht des linienartigen Markierungslichts im Messbereich des Bilds über der gesamten Streifenbreitenrichtung befindet, und
wobei die Steuereinheit (18B) eingerichtet ist, den Antriebsmechanismus (19) so zu steuern, dass die Bildgebungsvorrichtung (17) zur Mitte in Streifenkantenrichtung bewegt wird, wenn sich das regulär reflektierte Licht des Markierungslichts außerhalb des Messbereichs des Bilds befindet.

9. Schmelzmetall-Plattierungsanlage umfassend:
die Streifenkanten-Erfassungsvorrichtung nach einem der Ansprüche 1 bis 8; und
eine Wischvorrichtung (15) mit einer Wischdüse (151) und einer Düsenmaske (152) zum Einstellen eines Orts eines Öffnungsendes der Wischdüse (151) in Streifenbreitenrichtung,
wobei die Steuereinheit (18B) eingerichtet ist, aufgrund der Kantenlage einen Ort der Düsenmaske (152) in Streifenbreitenrichtung zu steuern.

10. Streifenkanten-Erfassungsverfahren zum Erfassen einer Kantenlage eines Stahlstreifens (1), der aus einem Schmelzmetallbad gezogen wird, umfassend:
Bereitstellen einer Lichtquelle (16), die dem Stahlstreifen (1) zugewandt angeordnet und eingerichtet ist, zum Stahlstreifen (1) hin ein sich in Streifenbreitenrichtung erstreckendes linienartiges Markierungslicht zu emittieren, einer Bildgebungsvorrichtung (17), die zur Aufnahme eines Bilds eines eine Kante des Stahlstreifens (1) enthaltenden Bereichs sowie eines regulär reflektierten Lichts des linienartigen Markierungslichts, das vom Stahlstreifen (1) reflektiert wird, eingerichtet ist, einer Analyseeinheit (18A), die eingerichtet ist, aufgrund des von der Bildgebungsvorrichtung (17) aufgenommenen Bilds als Kantenlage einen Endort des regulär reflektierten Lichts des linienartigen Markierungslichts, das vom Stahlstreifen (1) spiegelnd reflektiert wird, zu bestimmen, und eines Antriebsmechanismus (19), der zum Bewegen der Bildgebungsvorrichtung (17) entlang der Streifenbreitenrichtung des Stahlstreifens (1) eingerichtet ist; und
Steuern des Antriebsmechanismus (19), um aufgrund der von der Analyseeinheit (18A) bestimmten Kantenlage einen Ort der Bildgebungsvorrichtung (17) so einzustellen, dass die Kantenlage im Bild in Streifenbreitenrichtung zentriert ist.

## Revendications

1. Dispositif de détection de bord de bande pour détecter une position de bord d'une bande d'acier (1) sortie d'un bain de métal fondu (11), comprenant :
une source de lumière (16) disposée de façon à faire face à la bande d'acier (1) et configurée pour émettre une lumière de marquage de type ligne s'étendant le long d'un sens de la largeur de bande vers la bande d'acier (1) ;
un dispositif d'imagerie (17) configuré pour capturer une image d'une région incluant un bord de la bande d'acier (1) et une lumière réfléchie régulière de la lumière de marquage de type ligne réfléchie par la bande d'acier (1) ;
une unité d'analyse (18A) configurée pour déterminer une position d'extrémité de la lumière réfléchie régulière de la lumière de marquage de type ligne réfléchie de façon spéculaire par la bande d'acier (1) comme la position de bord, sur la base de l'image capturée par le dispositif d'imagerie (17) ;
un mécanisme d'entraînement (19) configuré pour déplacer le dispositif d'imagerie (17) le long du sens de la largeur de bande vers la bande d'acier (1) ; et
une unité de commande (18B) configurée pour commander le mécanisme d'entraînement (19) pour ajuster une position du dispositif d'imagerie (17) de façon à ce que la position de bord soit centrée dans l'image dans le sens de la largeur de bande, sur la base de la position de bord déterminée par l'unité d'analyse (18A).

2. Dispositif de détection de bord de bande selon la revendication 1,
dans lequel l'unité d'analyse (18A) est configurée pour déterminer la position de bord, sur la base d'une partie de l'image dans une plage de mesure fixée pour l'image au préalable.

3. Dispositif de détection de bord de bande selon la revendication 1 ou 2,
dans lequel l'unité d'analyse (18A) est configurée pour déterminer une distance du dispositif d'imagerie à la bande d'acier (1) par un procédé stéréo, sur la base de deux images capturées par le dispositif d'imagerie (17) en des positions différentes dans le sens de la largeur de bande.

4. Dispositif de détection de bord de bande selon l'une quelconque des revendications 1 à 3, comprenant en outre un dispositif d'amortissement (14) incluant un électroaimant (141) pour amortir une vibration de la bande d'acier (1) et corriger un gauchissement d'une partie de bord de la bande d'acier (1),
dans lequel l'unité de commande (18B) est configurée pour commander une position du dispositif d'amortissement (14) dans le sens de la largeur de bande, sur la base de la position de bord déterminée par l'unité d'analyse (18A).

5. Dispositif de détection de bord de bande selon la revendication 4,
dans lequel le mécanisme d'entraînement est le dispositif d'amortissement (14).

6. Dispositif de détection de bord de bande selon la revendication 5,
dans lequel le dispositif d'imagerie (17) est fixé au dispositif d'amortissement (14) de telle sorte qu'une position d'un axe optique du dispositif d'imagerie (17) dans le sens de la largeur de bande est située dans une plage s'étendant d'un centre d'un noyau de l'électroaimant (141) par rapport au sens de la largeur de bande vers le bord de la bande d'acier (1) sur une distance égale à une largeur (w) du noyau dans le sens de la largeur de bande.

7. Dispositif de détection de bord de bande selon la revendication 5,
dans lequel le dispositif d'imagerie (17) est fixé au dispositif d'amortissement (14) de telle sorte qu'une position d'un axe optique du dispositif d'imagerie (17) dans le sens de la largeur de bande est située dans une plage s'étendant d'un centre d'un noyau de l'électroaimant (141) par rapport au sens de la largeur de bande vers le bord de la bande d'acier (1) sur une distance qui est la moitié d'une largeur (w) du noyau dans le sens de la largeur de bande.

8. Dispositif de détection de bord de bande selon l'une quelconque des revendications 2 à 7,
dans lequel l'unité de commande (18B) est configurée pour commander le mécanisme d'entraînement (19) de façon à déplacer le dispositif d'imagerie (17) à l'écart d'un centre dans le sens de la largeur de bande si la lumière réfléchie régulière de la lumière de marquage de type ligne est dans la plage de mesure de l'image sur la totalité du sens de la largeur de bande, et
dans lequel l'unité de commande (18B) est configurée pour commander le mécanisme d'entraînement (19) de façon à déplacer le dispositif d'imagerie (17) vers le centre dans le sens de la largeur de bande si la lumière réfléchie régulière de la lumière de marquage est hors de la plage de mesure de l'image.

9. Installation de placage de métal fondu comprenant :
le dispositif de détection de bord de bande selon l'une quelconque des revendications 1 à 8 ; et
un dispositif d'essuyage (15) incluant une buse d'essuyage (151) et un masque de buse (152) ajustant une position d'une extrémité d'ouverture de la buse d'essuyage (151) dans le sens de la largeur de bande,
dans laquelle l'unité de commande (18B) est configurée pour commander une position du masque de buse (152) dans le sens de la largeur de bande, sur la base de la position de bord.

10. Procédé de détection de bord de bande pour détecter une position de bord d'une bande d'acier (1) sortie d'un bain de métal fondu (11), comprenant :
la prévision d'une source de lumière (16) disposée de façon à faire face à la bande d'acier (1) et configurée pour émettre une lumière de marquage de type ligne s'étendant le long d'un sens de la largeur de bande vers la bande d'acier (1), d'un dispositif d'imagerie (17) configuré pour capturer une image d'une région incluant un bord de la bande d'acier (1) et une lumière réfléchie régulière de la lumière de marquage de type ligne réfléchie par la bande d'acier (1), d'une unité d'analyse (18A) configurée pour déterminer une position d'extrémité de la lumière réfléchie régulière de la lumière de marquage de type ligne réfléchie de façon spéculaire par la bande d'acier (1) comme la position de bord, sur la base de l'image capturée par le dispositif d'imagerie (17), et d'un mécanisme d'entraînement (19) configuré pour déplacer le dispositif d'imagerie (17) le long du sens de la largeur de bande de la bande d'acier (1) ; et
la commande du mécanisme d'entraînement (19) pour ajuster une position du dispositif d'imagerie (17) de façon à ce que la position de bord soit centrée dans l'image dans le sens de la largeur de bande, sur la base de la position de bord déterminée par l'unité d'analyse (18A).
